# EUROPEAN PATENT APPLICATION

(11) **EP 4 701 260 A1**
(43) Date of publication of application: **25.02.2026**
(21) Application number: 23933522.7
(22) Date of filing: 21.04.2023
(51) Int. Cl.: H04W 24/10

(54) **INDICATION SENDING METHOD AND APPARATUS, INDICATION RECEIVING METHOD AND APPARATUS, COMMUNICATION APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Stöckeler, Ferdinand
(86) International application number: PCT/CN2023/089939
(87) International publication number: WO 2024/216646

(57) **Abstract**

The present disclosure relates to the technical field of communications, and in particular to an indication sending method and apparatus, an indication receiving method and apparatus, a communication apparatus, and a storage medium. The information sending method comprises: sending related information of a first measurement to a network device, wherein a terminal resides in a second radio access technology cell, and the terminal is configured with the first measurement, which is of first radio access technology. In the present disclosure, when a terminal resides in a second radio access technology cell and the terminal is configured with a first measurement of first radio access technology, the terminal can send related information of the first measurement to a network device. The related information can be used as auxiliary information to assist a network device in determining related information of a first measurement, such that the network device executes an appropriate operation, thereby facilitating the prevention of resource and overhead waste problems.

## Description

### FIELD

The present disclosure relates to the field of communication, and in particularly relates to an information sending method, an information receiving method, an information sending apparatus, an information receiving apparatus, a communication apparatus, and a computer-readable storage medium.

### BACKGROUND

Terminals may perform some measurement operations and send measurement results to network devices. However, when the terminal changes a radio access technology (RAT), some problems will arise.

### SUMMARY

Embodiments of the present disclosure propose an information sending method, an information receiving method, an information sending apparatus, an information receiving apparatus, a communication apparatus, and a computer-readable storage medium to solve technical problems in the related art.

According to a first aspect of embodiments of the present disclosure, there is provided an information sending method. The method is performed by a terminal and includes: sending related information of a first measurement to a network device, in which the terminal camps on a cell of a second radio access technology, and the terminal is configured with the first measurement of a first radio access technology.

According to a second aspect of embodiments of the present disclosure, there is provided an information receiving method. The method is performed by a network device and includes: receiving related information of a first measurement sent by a terminal, in which the terminal camps on a cell of a second radio access technology, and the terminal is configured with the first measurement of a first radio access technology.

According to a third aspect of embodiments of the present disclosure, there is provided an information sending apparatus. The apparatus is configured in a terminal and includes: a sending module configured to send related information of a first measurement to a network device, in which the terminal camps on a cell of a second radio access technology, and the terminal is configured with the first measurement of a first radio access technology.

According to a fourth aspect of embodiments of the present disclosure, there is provided an information receiving apparatus. The apparatus is configured in a network device and includes: a receiving module configured to receive related information of a first measurement sent by a terminal, in which the terminal camps on a cell of a second radio access technology, and the terminal is configured with the first measurement of a first radio access technology.

According to a fifth aspect of embodiments of the present disclosure, there is provided a communication system. The communication system includes a terminal configured to implement the information sending method according to any one of the embodiments described above and a network device configured to implement the information receiving method according to any one of the embodiments described above.

According to a sixth aspect of embodiments of the present disclosure, there is provided a communication apparatus. The communication apparatus includes: a processor; and a memory storing a computer program, in which the processor is configured to execute the computer program to implement the information sending method according to any one of the embodiments described above.

According to a seventh aspect of embodiments of the present disclosure, there is provided a communication apparatus. The communication apparatus includes: a processor; and a memory storing a computer program, in which the processor is configured to execute the computer program to implement the information receiving method according to any one of the embodiments described above.

According to an eighth aspect of embodiments of the present disclosure, there is provided a computer-readable storage medium storing a computer program that when executed by a processor, implement the information sending method according to any one of the embodiments described above.

According to a ninth aspect of embodiments of the present disclosure, there is provided a computer-readable storage medium storing a computer program that when executed by a processor, implement the information receiving method according to any one of the embodiments described above.

In embodiments of the present disclosure, in a case where the terminal camps on the cell of the second radio access technology and the terminal is configured with the first measurement of the first radio access technology, the terminal may send the related information of the first measurement to the network device. The related information may be used as auxiliary information to assist the network device in determining the related information of the first measurement, such that the network device performs an appropriate operation, facilitating the prevention of resource and overhead waste problems.

### BRIEF DESCRIPTION OF THE DRAWINGS

To describe technical solutions in embodiments of the present disclosure more clearly, the following briefly introduces the accompanying drawings required for the description of the embodiments. Obviously, the accompanying drawings described below show some embodiments of the present disclosure, and those skilled in the art can obtain other drawings based on these drawings without paying creative efforts.
FIG. 1 is a schematic diagram of an application scenario according to an embodiment of the present disclosure.
FIG. 2 is a flowchart of an information sending method according to an embodiment of the present disclosure.
FIG. 3 is a flowchart of another information sending method according to an embodiment of the present disclosure.
FIG. 4 is a flowchart of yet another information sending method according to an embodiment of the present disclosure.
FIG. 5 is a flowchart of yet another information sending method according to an embodiment of the present disclosure.
FIG. 6 is a flowchart of yet another information sending method according to an embodiment of the present disclosure.
FIG. 7 is a flowchart of an information receiving method according to an embodiment of the present disclosure.
FIG. 8 is a block diagram of an information sending apparatus according to an embodiment of the present disclosure.
FIG. 9 is a block diagram of an information receiving apparatus according to an embodiment of the present disclosure.
FIG. 10 is a block diagram of an apparatus for receiving information according to an embodiment of the present disclosure.
FIG. 11 is a block diagram of an apparatus for sending information according to an embodiment of the present disclosure.

### DETAILED DESCRIPTION OF THE DISCLOSURE

The implementations or embodiments of the present disclosure are not exhaustive, but are merely illustrative of some implementations or embodiments, and are not intended to be a specific limitation on the scope of protection of the present disclosure. In the absence of contradictions, each step in a certain embodiment or implementation may be implemented as an independent embodiment, and the steps may be arbitrarily combined, for example, a solution in which some steps are removed in a certain embodiment or implementation can also be implemented as an independent embodiment, and the order of each step in a certain embodiment or implementation may be arbitrarily exchanged, and in addition, optional manners or examples in a certain embodiment or implementation may be arbitrarily combined. In addition, various embodiments or implementations may be arbitrarily combined, for example, some or all steps of different embodiments or implementations may be arbitrarily combined, and one embodiment or implementation may be arbitrarily combined with optional manners or examples of other embodiments or implementations.

In some implementations or embodiments, terms such as "in response to," "in a case where," "upon," "when," "if," "in case," and the like in the present disclosure may be interchangeable with each other.

In some implementations or embodiments, descriptions such as "A or B", "A and/or B" "at least one of A and B" "A in one case, B in another case" and "in response to one case A, in response to another case B" in the present disclosure may include at least one of the following technical solutions according to the cases: performing A independently of B, i.e., in some implementations or embodiments, A; performing B independently of A, i.e., in some implementations or embodiments, B; selectively performing A and B, i.e., in some implementations or embodiments, selecting one from A and B to perform; performing both A and B, i.e., in some implementations or embodiments, A and B.

In some implementations or embodiments, "including A," "comprising A," "for indicating A," "carrying A," in the present disclosure may be interpreted as directly carrying A, or may be interpreted as indirectly indicating A.

Further, each element, each row, or each column in the table of the present disclosure may be implemented as an independent embodiment, and any combination of any element, any row, or any column may also be implemented as an independent embodiment.

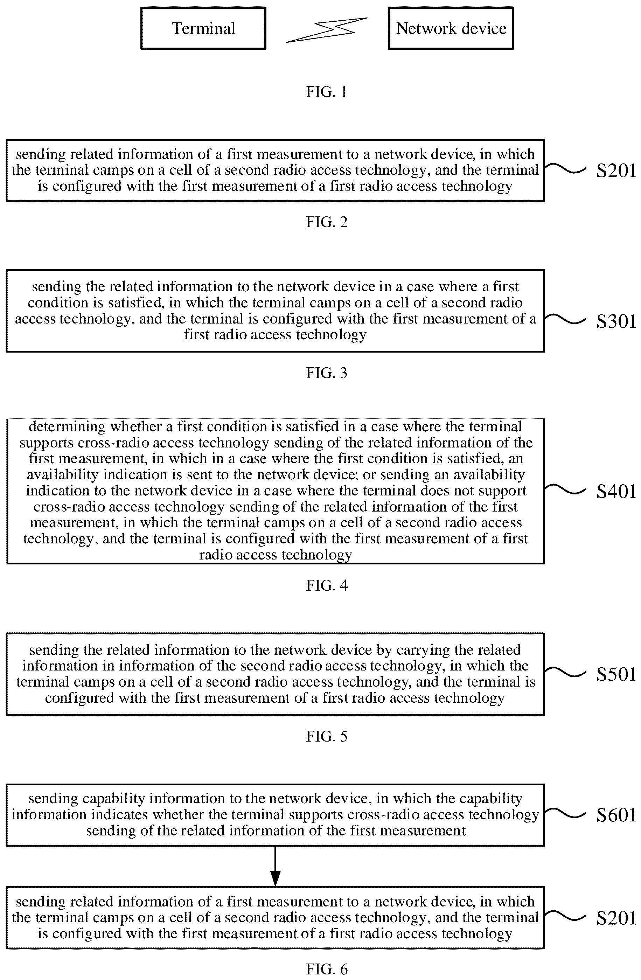

FIG. 1 is a schematic diagram of an application scenario according to an embodiment of the present disclosure.

As illustrated in FIG. 1, an embodiment of the present disclosure may be applied to a scenario in which a terminal communicates with a network device, but is not limited to this scenario. The entities illustrated in FIG. 1 are illustrative. Implementations or embodiments of the present disclosure may include all or part of the entities illustrated in FIG. 1, or may include other entities not illustrated in FIG. 1. The number of each entity is arbitrary, and is not limited by FIG. 1. The connection relationships illustrated in FIG. 1 are illustrative. Any two entities may be either disconnected or connected. The connections can be implemented in any manner, such as direct or indirect connections, and wired or wireless connections.

It should be noted that the terminal in embodiments of the present disclosure includes, but is not limited to, a communication apparatus such as a mobile phone, a tablet computer, a wearable device, a sensor, and an Internet of Things device, and the terminal may communicate with the network device. The network device in embodiments of the present disclosure includes, but is not limited to, a network device in a communication system such as 4G, 5G, and 6G, e.g., a base station, a core network, and the like.

FIG. 2 is a flowchart of an information sending method according to an embodiment of the present disclosure. The information sending method illustrated in the present embodiment may be performed by a terminal. As illustrated in FIG. 2, the information sending method may include the following steps.

In step S201: related information of a first measurement is sent to a network device, in which the terminal camps on a cell of a second radio access technology, and the terminal is configured with the first measurement of a first radio access technology.

In an embodiment, the terminal camping on the cell of the second radio access technology includes reselection of the terminal to the cell of the second radio access technology, or other cases where the terminal camps on the cell of the second radio access technology.

In an embodiment, the terminal may be configured with the first measurement of the first radio access technology. For example, in a case where the terminal camps on a cell of the first radio access technology, the network device may configure the terminal to perform the first measurement of the first radio access technology, the terminal may perform the first measurement, and may also perform logging of a measurement result of the first measurement.

Thus, the terminal being configured with the first measurement of the first radio access technology includes at least one of: the network device configuring the terminal to perform the first measurement of the first radio access technology; or the terminal logging a measurement result of the first measurement of the first radio access technology.

In an embodiment, the first measurement includes at least one of: a minimization of drive test (MDT) log; an idle mode measurement log (logging measurements in RRC_IDLE); an inactive mode measurement log (logging measurements in RRC_INACTIVE); a random access (RA-report) information log; a connection establishment failure (CEF) information log; a radio link failure (RLF-report) information log; a mobility history information (MobilityHistoryReport) log; a successful handover (successful HO report, SHR) information log; a coarse location information (coarseLocationInfo) log.

The MDT may include at least one of a logged MDT and an immediate MDT, and the logged MDT and the immediate MDT may include at least one of a signaling-based MDT and a management-based MDT.

In an embodiment, the first radio access technology is long term evolution (LTE) and the second radio access technology is new radio (NR); or the first radio access technology is new radio and the second radio access technology is long term evolution.

It should be noted that the first radio access technology and the second radio access technology are not limited to the above-described case, provided that they are different from each other.

For example, the first measurement includes an MDT log, the first radio access technology is LTE, and the second radio access technology is NR.

In a case where the terminal camps on an LTE cell, the network device may configure the terminal to perform the MDT, for example, the network device sends a configuration of the MDT to the terminal, the terminal may perform the MDT according to the configuration of the MDT, and logs a measurement result of the MDT.

In a case where the terminal subsequently camps on a NR cell, the network device may configure the terminal to perform the MDT, for example, send a configuration of the MDT to the terminal. In a case where the terminal is still configured with the MDT of LTE, for example, the terminal has the configuration of the MDT of LTE (that is, configured to perform the MDT of LTE), and/or the terminal has the measurement result of the MDT of LTE, a configuration of the MDT received by the terminal in the NR cell will override the configuration of the MDT of LTE and the measurement result of the MDT of LTE, and for example, cause the terminal to delete the configuration of the MDT of LTE and the measurement result of the MDT of LTE.

However, in a case where the configuration of the MDT of LTE is still available, deleting the configuration of the MDT of LTE leads to waste of resources, and deleting the measurement result of the MDT of LTE leads to waste of overhead of the MDT performed by the terminal in order to obtain the measurement result. It can be seen that in a case where the terminal camps on the NR cell and the terminal is configured with the MDT of LTE, there will be some problems of waste of resources and overhead.

In embodiments of the present disclosure, in a case where the terminal camps on the cell of the second radio access technology and the terminal is configured with the first measurement of the first radio access technology, the terminal may send the related information of the first measurement to the network device. The related information may be used as auxiliary information to assist the network device in determining the related information of the first measurement, such that the network device performs an appropriate operation, facilitating the prevention of resource and overhead waste problems.

In an embodiment, the related information of the first measurement includes at least one of: a measurement result of the first measurement; or an availability indication of the first measurement.

For example, the related information of the first measurement includes the availability indication of the first measurement. For example, in a case where the terminal camps on the NR cell and the terminal is configured with the MDT of LTE, the terminal may send the availability indication of the MDT to the network device, for example, to indicate whether the configuration of the MDT in the terminal is available or whether the measurement result of the MDT in the terminal is available. After receiving the availability indication of the MDT, for example, the network device determines that the configuration of the MDT in the terminal is available according to the availability indication of the MDT, the network device may not need to send the configuration of the MDT to the terminal; for example, the network device determines that the measurement result of the MDT in the terminal is available according to the availability indication of the MDT, and the network device may request the terminal to send the measurement result of the MDT. Accordingly, it is beneficial in ensuring that the configuration of the MDT and the measurement result of the MDT in the terminal may be fully utilized, and in saving resources required for the network device to send the configuration of the MDT to the terminal.

For example, the related information of the first measurement includes the measurement result of the first measurement. For example, in a case where the terminal camps on the NR cell and the terminal is configured with the MDT of LTE, the terminal may send the measurement result of the MDT to the network device. After receiving the measurement result of the MDT, the network device may determine whether the measurement result received is available. For example, the network device determines that the measurement result of MDT in the terminal is available, the network device may not need to send the configuration of the MDT to the terminal; for example, the network device determines that the measurement result of the MDT is not available, the network device may send a configuration of the MDT to the terminal. Accordingly, it is beneficial in ensuring that the measurement result of the MDT in the terminal may be fully utilized, and in a case where the measurement result of the MDT is available to the network device, resources required for the network device to send the configuration of the MDT to the terminal may be saved.

It should be notated that the related information sent by the terminal to the network device may only indicate the related information of the first measurement, and the network device may determine whether the configuration of the first measurement in the terminal is available and/or whether the measurement result of the first measurement is available according to the related information.

Alternatively, the related information sent by the terminal to the network device may be related information of the first measurement of the first radio access technology, and the network device may determine that the first measurement is a first measurement of the first radio access technology according to the availability indication, and determine whether the configuration of the first measurement of the first radio access technology in the terminal is available and/or whether the measurement result of the first measurement of the first radio access technology is available. Since the network device may determine that the first measurement is the first measurement of the first radio access technology instead of the first measurement of the second radio access technology based on the related information, the network device may more comprehensively determine whether it is necessary to send a configuration of the first measurement to the terminal in the cell of the second radio access technology.

In an embodiment, the availability indication includes at least one of: an availability indication of a configuration of the first measurement, in which the terminal has the configuration of the first measurement; or an availability indication of a measurement result of the first measurement, in which the terminal has the measurement result of the first measurement.

For example, in a case where the terminal has the configuration of the first measurement, the availability indication sent to the network device may include an availability indication of the configuration of the first measurement. The network device may determine whether the configuration of the first measurement is available according to the availability indication, and in a case where it is determined that the configuration of the first measurement is still available, the network device may not send a configuration of the first measurement to the terminal in the cell of the second radio access technology, so that the terminal does not delete the configuration of the first measurement, and may continue to perform the first measurement based on the existing configuration of the first measurement. Accordingly, it is beneficial in ensuring that the configuration of the first measurement in the terminal may be fully utilized, and in saving resources required for the network device to send the configuration to the terminal.

It should be note that in a case where the network device determines that the configuration of the first measurement is available according to a first availability indication, the network device may not send a configuration of the first measurement to the terminal in the cell of the second radio access technology, or may send a configuration of the first measurement to the terminal in the cell of the second radio access technology, for example, the network device may send a configuration of the first measurement based on the second radio access technology to the terminal in the cell of the second radio access technology, which is determined by the network device independently.

For example, in a case where the terminal has the configuration of the first measurement, the availability indication sent to the network device may include an availability indication of the measurement result of the first measurement. The network device may determine whether the measurement result of the first measurement is available according to the availability indication, and in a case where it is determined that the measurement result of the first measurement is available, the network device may not send a configuration of the first measurement to the terminal in the cell of the second radio access technology, so that the terminal does not delete the measurement result of the first measurement, and may send the measurement result of the first measurement to the network device. Accordingly, it is beneficial in saving resources required for the network device to send the configuration to the terminal. Accordingly, it is beneficial in ensuring that the measurement result of the first measurement in the terminal may be fully utilized, and in saving resources required for the network device to send the configuration to the terminal.

It should be note that in a case where the network device determines that the measurement result of the first measurement is available according to the first availability indication, the network device may not send a configuration of the first measurement to the terminal in the cell of the second radio access technology, or may send a configuration of the first measurement to the terminal in the cell of the second radio access technology, which is determined by the network device independently.

In an embodiment, in a case where the terminal has the measurement result of the first measurement, it may be determined that the measurement result of the first measurement is available, so that the availability indication of the first measurement sent to the network device may indicate that the measurement result of the first measurement is available. Correspondingly, in a case where the terminal does not have the measurement result of the first measurement, it may be determined that the measurement result of the first measurement is not available, so that the availability indication of the first measurement is not sent to the network device.

In a case where the terminal has the configuration of the first measurement, it may be directly determined that the configuration of the first measurement is available, or it may be determined whether the configuration of the first measurement is available in combination with other information, for example, it may be determined whether the configuration of the first measurement is available based on validity information of the configuration of the first measurement.

In an embodiment, the terminal having the configuration of the first measurement includes one of:
the terminal is configured with the configuration of the first measurement; or
the terminal is configured with the configuration of the first measurement, and the configuration of the first measurement is valid.

For example, in a case where the terminal camps on the cell of the second radio access technology and the terminal has the configuration of the first measurement of the first radio access technology, the terminal may send the availability indication of the first measurement to the network device, and the availability indication indicates the availability of the configuration of the first measurement. Correspondingly, in a case where the terminal camps on the cell of the second radio access technology cell and the terminal does not have the configuration of the first measurement of the first radio access technology, the terminal may send the availability indication of the first measurement to the network device, and the availability indication indicates unavailability of the configuration of the first measurement.

For example, in a case where the terminal camps on the cell of the second radio access technology and the terminal is configured with the configuration of the first measurement of the first radio access technology, the terminal may determine whether the configuration of the first measurement is valid, and in a case where the configuration of the first measurement is valid, the terminal may send an availability indication of the first measurement to the network device, and the availability indication indicates the availability of the configuration of the first measurement; or in a case where the configuration of the first measurement is invalid, the terminal may send an availability indication of the first measurement to the network device, and the availability indication indicates unavailability of the configuration of the first measurement.

The determination of whether or not the configuration of the first measurement is valid will be illustrated by several embodiments below.

In an embodiment, the configuration of the first measurement being valid includes at least one of: a current time is within a validity time corresponding to the configuration of the first measurement; or the terminal is within a validity area corresponding to the configuration of the first measurement.

For example, the terminal may determine whether the configuration of the first measurement is valid from a time dimension, for example, determine whether the current time is within the validity time corresponding to the configuration of the first measurement. The terminal may determine that the configuration of the first measurement is valid in a case where the current time is within the validity time corresponding to the configuration of the first measurement, and determine that the configuration of the first measurement is invalid in a case where the current time is not within the validity time corresponding to the configuration of the first measurement.

The terminal may determine whether the current time is within the validity time corresponding to the configuration of the first measurement based on a timer, for example, a timeout time of the timer is the validity time, and the timer may start timing when the terminal receives the configuration of the first measurement of the first radio access technology, in a case where the timer does not time out, the configuration of the first measurement may be determined to be valid, and in a case where the timer times out, the configuration of the first measurement may be determined to be invalid. For example, the timer may include a T330 timer of the first radio access technology, and the timer may be a T330 timer of LTE in a case where the first radio access technology is LTE.

For example, the terminal may determine whether the configuration of the first measurement is valid from a spatial dimension, for example, determine whether the terminal is within the validity area corresponding to the configuration of the first measurement. The terminal may determine that the configuration of the first measurement is valid in a case where the terminal is within the validity area corresponding to the configuration of the first measurement, and determine that the configuration of the first measurement is invalid in a case where the terminal is not within the validity area corresponding to the configuration of the first measurement.

It should be noted that the validity information corresponding to the configuration of the first measurement of the first radio access technology, such as the validity time and the validity area, may be sent by the network device to the terminal by carrying the validity information in the configuration of the first measurement of the first radio access technology, or may be determined by the terminal through another method, for example, may be determined based on a protocol agreement, or may be determined by the terminal based on an implementation, which is not limited by the present disclosure.

FIG. 3 is a flowchart of another information sending method according to an embodiment of the present disclosure. The information sending method illustrated in the present embodiment may be performed by a terminal, and as illustrated in FIG. 3, sending the related information of the first measurement to the network device includes the following.

In step S301: the related information is sent to the network device in a case where a first condition is satisfied.

It should be noted that the embodiment illustrated in FIG. 3 may be implemented independently or in combination with at least one other embodiment of the present disclosure, and the specific embodiment may be selected as necessary, which is not limited by the present disclosure.

In an embodiment, in a case where the terminal camps on the cell of the second radio access technology and the terminal is configured with the first measurement of the first radio access technology, the terminal may further determine whether the first condition is satisfied. In a case where the first condition is satisfied, the terminal will send the related information of the first measurement to the network device; or in a case where the first condition is not satisfied, the terminal does not need to send the related information of the first measurement to the network device. Accordingly, it is beneficial in improving the operation controllability of the terminal to send the related information to the network device.

The first condition may be indicated by the network device, or may be agreed by a protocol, or may be determined by the terminal based on an implementation.

In an embodiment, the first condition includes at least one of:
an identifier of a network currently registered by the terminal is a predefined (e.g., agreed by a protocol) network identifier; or
an identifier of a network currently registered by the terminal is a preconfigured network identifier.

For example, the terminal may determine whether the identifier of the network currently registered by the terminal is a predefined network identifier, and in a case where it is the predefined network identifier, the terminal may determine that the first condition is satisfied, and send the related information of the first measurement to the network device; in a case where it is not the predefined network identifier, the terminal may determine that the first condition is not satisfied, and does not need to send the related information of the first measurement to the network device.

For example, the terminal may determine whether the identifier of the network currently registered is the preconfigured network identifier, and in a case where it is the preconfigured network identifier, the terminal may determine that the first condition is satisfied, and send the related information of the first measurement to the network device; in a case where it is not preconfigured network identifier, the terminal may determine that the first condition is not satisfied, and does not need to send the related information of the first measurement to the network device.

In an embodiment, the predefined network identifier includes a network identifier when the terminal receives the configuration of the first measurement of the first radio access technology. The network identifier when the terminal receives the configuration of the first measurement of the first radio access technology may include at least one network identifier, and the at least one network identifier may be stored in the form of a list or may be stored in other forms, for example, the terminal stores the at least one network identifier in a reporting variable (e.g., VarLogMeasReport).

For example, the terminal may determine whether the identifier of the network currently registered is the predefined network identifier, and specifically may determine whether the network currently registered is a network identifier when the terminal receives the configuration of the first measurement of the first radio access technology. In a case where it is the network identifier when the terminal receives the configuration of the first measurement of the first radio access technology, the terminal may determine that the first condition is satisfied, and send the related information of the first measurement to the network device; in a case where it is not the network identifier when the terminal receives the configuration of the first measurement of the first radio access technology, the terminal may determine that the first condition is not satisfied, and does not need to send the related information of the first measurement to the network device.

It should be noted that the predefined network identifier is not limited to the network identifier when the terminal receives the configuration of the first measurement of the first radio access technology, and for example, other network identifiers may be included in the predefined network identifier, which is not limited by the present disclosure.

In an embodiment, the network identifier includes at least one of: an identifier of a selected network; an identifier of a registered network; or an identifier of at least one equivalent network of the registered network.

In an embodiment, the preconfigured network identifier includes a network identifier indicated by the configuration of the first measurement of the first radio access technology. For example, in a case where the network device sends the configuration of the first measurement of the first radio access technology to the terminal, the network device may carry the network identifier in the configuration of the first measurement of the first radio access technology, and the terminal may determine that the network identifier carried in the configuration of the first measurement of the first radio access technology is the preconfigured network identifier.

It should be noted that the preconfigured network identifier is not limited to the network identifier indicated by the configuration of the first measurement of the first radio access technology, and the network identifier configured by the network device to the terminal in other manners may serve as the preconfigured network identifier, which is not limited by the present disclosure. For example, in a case where the terminal camps on the cell of the second radio access technology, the network device may indicate the network identifier through signaling of the second radio access technology, and the terminal may determine that the network identifier indicated by the signaling of the second radio access technology is the preconfigured network identifier.

FIG. 4 is a flowchart of yet another information sending method according to an embodiment of the present disclosure. The information sending method illustrated in the present embodiment may be performed by a terminal, and as illustrated in FIG. 4, sending the availability indication of the first measurement of the first radio access technology to the network device includes the following.

In step S401: it is determined whether a first condition is satisfied in a case where the terminal supports cross-radio access technology sending of the related information of the first measurement, in which in a case where the first condition is satisfied, an availability indication is sent to the network device; or in a case where the terminal does not support cross-radio access technology sending of the related information of the first measurement, an availability indication is sent to the network device.

It should be noted that the embodiment illustrated in FIG. 4 may be implemented independently or in combination with at least one other embodiment of the present disclosure, and the specific embodiment may be selected as necessary, which is not limited by the present disclosure. Regarding the first condition in step S401, reference may be made to the embodiment of FIG. 3, which will not be repeated.

In an embodiment, in a case where the terminal camps on the cell of the second radio access technology and the terminal is configured with the first measurement of the first radio access technology, the terminal determines whether it supports cross-radio access technology (Cross-RAT) sending of the related information of the first measurement.

In a case where the terminal supports cross-radio access technology sending of the related information of the first measurement, it is necessary to ensure that the related information of the first measurement may be sent to a specific node (e.g., a network, the terminal may determine that the network needs to acquire the related information of the first measurement), so it is further determined whether the first condition needs to be satisfied, for example, whether the identifier of the network currently registered by the terminal is the predefined network identifier and/or the preconfigured network identifier; in a case where the terminal does not support cross-radio access technology sending of the related information of the first measurement, it is not necessary to ensure that the related information of the first measurement may be sent to a specific node (e.g., a network, the terminal may determine that no network needs to acquire the related information of the first measurement), so it is not necessary to determine whether the first condition needs to be satisfied, and in a case where the terminal camps on the cell of the second radio access technology and the terminal is configured with the first measurement of the first radio access technology, the terminal directly sends the related information of the first measurement to the network device.

In an embodiment, the protocol may stipulate or default that the cross-radio access technology sending of a measurement report is supported, and in a case where the terminal itself supports cross-radio access technology sending of the related information of the first measurement, the terminal camps on the cell of the second radio access technology and the terminal is configured with the first measurement of the first radio access technology, it is determined whether an operation of determining whether the first condition is satisfied is required, and it is further determined whether the related information of the first measurement is sent to the network device. The related information of the first measurement includes at least one of: a report of the first measurement; or an availability indication of the first measurement.

In an embodiment, the protocol may stipulate or default that the cross-radio access technology sending of the measurement report is not supported, the terminal does not need to perform the operation of determining whether the first condition is satisfied, and in a case where the terminal camps on the cell of the second radio access technology and the terminal is configured with the first measurement of the first radio access technology, the terminal may directly send the related information of the first measurement to the network device.

In an embodiment, the protocol may stipulate or default that the cross-radio access technology sending of the measurement report is not supported, the terminal still needs to perform the operation of determining whether the first condition is satisfied, and in a case where the terminal camps on cell of the second radio access technology and the terminal is configured with the first measurement of the first radio access technology, the terminal determines whether the first condition needs to be satisfied, and further determines whether the availability indication of the first measurement is sent to the network device.

FIG. 5 is a flowchart of yet another information sending method according to an embodiment of the present disclosure. The information sending method illustrated in the present embodiment may be performed by a terminal, and as illustrated in FIG. 5, sending the related information of the first measurement to the network device includes the following.

In step S501: the related information of the first measurement is determined according to information of the second radio access technology sent by the terminal.

It should be noted that the embodiment illustrated in FIG. 5 may be implemented independently or in combination with at least one other embodiment of the present disclosure, and the specific embodiment may be selected as necessary, which is not limited by the present disclosure.

In an embodiment, the terminal may reuse information of the second radio access technology to carry the related information of the first measurement for sending to the network device, or reuse the information of the second radio access technology to indicate the related information of the first measurement to the network device. Accordingly, the existing information can be fully utilized without newly defined information, which is conducive to simplifying the protocol.

In an embodiment, the information of the second radio access technology for carrying the related information of the first measurement may include signaling of the second radio access technology, such as radio resource control (RRC) signaling, in which the RRC signaling includes at least one of: RRCSetupComplete, RRCConnectionSetupComplete, RRCResumeComplete, RRCConnectionResumeComplete. The signaling of the second radio access technology may carry an availability indication of the first measurement of the first radio access technology to indicate the related information of the first measurement, or the signaling of the second radio access technology may carry an availability indication of the first measurement of the second radio access technology to indicate the related information of the first measurement.

In an embodiment, the terminal indicates the related information of the first measurement through the information of the second radio access technology. The information of the second radio access technology for indicating the related information of the first measurement may include an availability indication of the second radio access technology. In this case, the information in the second radio access technology (specifically e.g., the availability indication of the second radio access technology described above) includes at least one of: a logged measurement availability indication; a logged Bluetooth measurement (logMeasAvailableBT) availability indication; a logged wireless local area network (logMeasAvailableWLAN) availability indication; or a logged measurement configuration (sigLogMeasConfigAvailable) availability indication.

For example, in a case where the terminal has the measurement result of the first measurement, the terminal may indicate the availability of the measurement result of the first measurement to the network device through the logged measurement availability indication of the second radio access technology. Further, in a case where the measurement result is a measurement result for Bluetooth, the terminal may indicate the availability of the measurement result of the first measurement to the network device through the logged Bluetooth measurement availability indication; in a case where the measurement result is a measurement result for the wireless local area network, the terminal may indicate the availability indication of the measurement result of the first measurement to the network device through the logged wireless local area network measurement availability indication.

For example, in a case where the terminal has the configuration of the first measurement, the terminal may indicates an availability indication of the configuration of the first measurement through the logged measurement configuration availability indication of the second radio access technology.

In an embodiment, the terminal may send the availability indication of the first measurement to the network device by carrying the newly defined availability indication of the first radio access technology in signaling of the second radio access technology, and by carrying the availability indication of the first measurement in the availability indication of the first radio access technology.

FIG. 6 is a flowchart of yet another information sending method according to an embodiment of the present disclosure. The information sending method illustrated in the present embodiment may be performed by a terminal, and as illustrated in FIG. 6, the information sending method further includes the following.

In step S601: capability information is sent to the network device, in which the capability information indicates whether the terminal supports cross-radio access technology sending of the related information of the first measurement.

It should be noted that the embodiment illustrated in FIG. 6 may be implemented independently or in combination with at least one other embodiment of the present disclosure, and the specific embodiment may be selected as necessary, which is not limited by the present disclosure.

In an embodiment, the related information of the first measurement may include at least one of: a measurement result of the first measurement; or an availability indication of the first measurement.

In an embodiment, the related information of the first measurement includes the availability indication of the first measurement. The terminal may send capability information to the network device, and the capability information indicates whether the terminal supports cross-radio access technology sending of the availability indication of the first measurement. Accordingly, it is beneficial in ensuring that the network device determines whether the terminal supports cross-radio access technology sending of the availability indication of the first measurement, so that the network device may subsequently perform an appropriate operation.

For example, in a case where the network device determines that the terminal supports cross-radio access technology sending of the availability indication of the first measurement according to the capability information, the network device requests the terminal to report the availability indication; in a case where the network device determines that the terminal does not support cross-radio access technology sending of the availability indication of the first measurement according to the capability information, the network device does not request the terminal to report the availability indication.

In an embodiment, the related information of the first measurement includes the measurement result of the first measurement. The terminal may send capability information to the network device, and the capability information indicates whether the terminal supports cross-radio access technology sending of the measurement result of the first measurement. Accordingly, it is beneficial in ensuring that the network device determines whether the terminal supports cross-radio access technology sending of the measurement result of the first measurement, so that the network device may subsequently perform an appropriate operation.

For example, in a case where the network device determines that the terminal supports cross-radio access technology sending of the measurement result of the first measurement according to the capability information, the network device requests the terminal to report the measurement result; in a case where the network device determines that the terminal does not support cross-radio access technology sending of the availability indication of the first measurement according to the capability information, the network device does not request the terminal to report the measurement result.

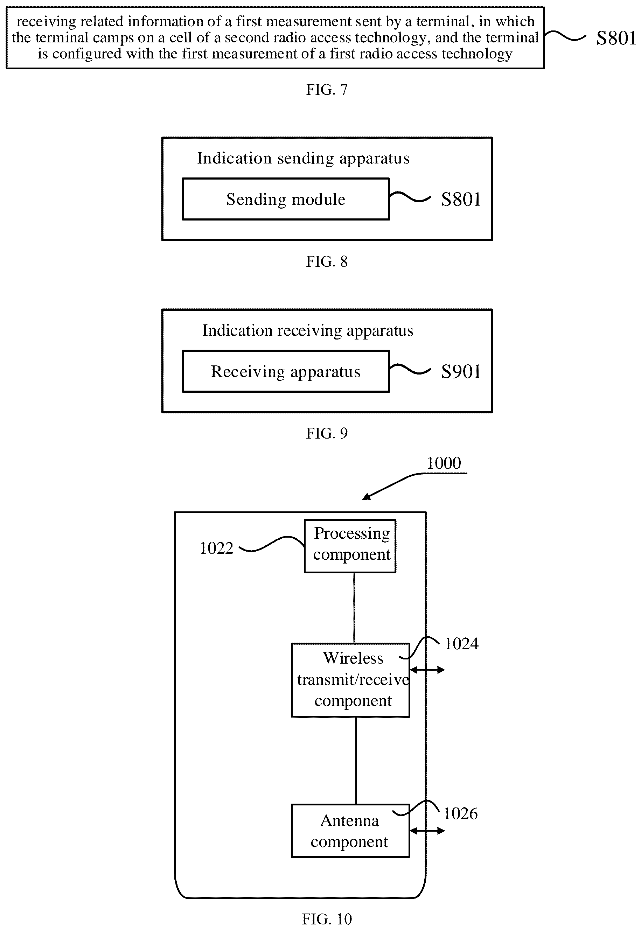

FIG. 7 is a flowchart of an information receiving method according to an embodiment of the present disclosure. The information receiving method illustrated in the present embodiment may be executed by a network device, and the network device may communicate with the terminal, the network device includes but is not limited to a base station in a communication system such as a 4G base station, a 5G base station, and a 6G base station, and the terminal includes but is not limited to a communication apparatus such as a mobile phone, a tablet computer, a wearable device, a sensor, and an Internet of Things device.

As illustrated in FIG. 7, the information receiving method may include the following steps.

In step S701: related information of a first measurement sent by the terminal is received, in which the terminal camps on a cell of a second radio access technology, and the terminal is configured with the first measurement of a first radio access technology.

In an embodiment, the terminal camping on the cell of the second radio access technology includes reselection of the terminal to the cell of the second radio access technology, or other cases where the terminal camps on the cell of the second radio access technology.

In an embodiment, the network device may configure the terminal with the first measurement of the first radio access technology. For example, in a case where the terminal camps on a cell of the first radio access technology, the network device may configure the terminal to perform the first measurement of the first radio access technology, the terminal may perform the first measurement, and may also perform logging of a measurement result of the first measurement.

Thus, the terminal being configured with the first measurement of the first radio access technology includes at least one of: the network device configuring the terminal to perform the first measurement of the first radio access technology; or the terminal logging a measurement result of the first measurement of the first radio access technology.

In an embodiment, the first measurement includes at least one of: a minimization of drive test log; an idle mode measurement log; an inactive mode measurement log; a random access information log; a connection establishment failure information log; a radio link failure information log; a mobility history information log; a successful handover information log; or a coarse location information log. The MDT may include a logged MDT.

The MDT may include at least one of a logged MDT and an immediate MDT, and the logged MDT and the immediate MDT may include at least one of a signaling-based MDT and a management-based MDT.

In an embodiment, the first radio access technology is long term evolution and the second radio access technology is new radio; or the first radio access technology is new radio and the second radio access technology is long term evolution.

It should be noted that the first radio access technology and the second radio access technology are not limited to the above-described case, provided that they are different from each other.

In embodiments of the present disclosure, in a case where the terminal camps on the cell of the second radio access technology and the terminal is configured with the first measurement of the first radio access technology, the terminal may send the related information of the first measurement to the network device. The network device may use the related information as auxiliary information to assist the network device in determining the related information of the first measurement, such that the network device performs an appropriate operation, facilitating the prevention of resource and overhead waste problems.

In an embodiment, the related information of the first measurement includes at least one of: a measurement result of the first measurement; or an availability indication of the first measurement.

For example, the related information of the first measurement includes the availability indication of the first measurement. For example, in a case where the terminal subsequently camps on the NR cell and the terminal is configured with the MDT of LTE, the terminal may send the availability indication of the MDT to the network device, for example, may indicate whether the configuration of the MDT in the terminal is available or whether the measurement result of the MDT in the terminal is available. After receiving the availability indication of the MDT, for example, the network device determines that the configuration of the MDT in the terminal is available according to the availability indication of the MDT, the network device may not need to send a configuration of the MDT to the terminal; for example, the network device determines that the measurement result of the MDT in the terminal is available according to the availability indication of the MDT, and the network device may request the terminal to send the measurement result of the MDT. It is beneficial in ensuring that the configuration of the MDT and the measurement result of the MDT in the terminal may be fully utilized, and in saving resources required for the network device to send the configuration of the MDT to the terminal.

For example, the related information of the first measurement includes the measurement result of the first measurement. For example, in a case where the terminal camps on the NR cell and the terminal is configured with the MDT of LTE, the terminal may send the measurement result of the MDT to the network device. After receiving the measurement result of the MDT, the network device may determine whether the measurement result received is available. For example, the network device determines that the measurement result of MDT in the terminal is available, the network device may not need to send a configuration of the MDT to the terminal; for example, the network device determines that the measurement result of the MDT is not available, the network device may send a configuration of the MDT to the terminal. Accordingly, it is beneficial in ensuring that the measurement result of the MDT in the terminal may be fully utilized, and in a case where the measurement result of the MDT is available to the network device, resources required for the network device to send the configuration of the MDT to the terminal may be saved.

In an embodiment, the availability indication includes at least one of: an availability indication of a configuration of the first measurement; or an availability indication of a measurement result of the first measurement.

For example, in a case where the terminal has the configuration of the first measurement, the availability indication sent to the network device may include an availability indication of the configuration of the first measurement. The network device may determine whether the configuration of the first measurement is available according to the availability indication, and in a case where it is determined that the configuration of the first measurement is still available, the network device may not send a configuration of the first measurement to the terminal in the cell of the second radio access technology, so that the terminal does not delete the configuration of the first measurement, and may continue to perform the first measurement based on the existing configuration of the first measurement. Accordingly, it is beneficial in ensuring that the configuration of the first measurement in the terminal may be fully utilized, and in saving resources required for the network device to send the configuration to the terminal.

It should be note that in a case where the network device determines that the configuration of the first measurement is available according to a first availability indication, the network device may not send a configuration of the first measurement to the terminal in the cell of the second radio access technology, or may send a configuration of the first measurement to the terminal in the cell of the second radio access technology, for example, the network device may send a configuration of the first measurement based on the second radio access technology to the terminal in the cell of the second radio access technology, which is determined by the network device independently.

For example, in a case where the terminal has the configuration of the first measurement, the availability indication sent to the network device may include an availability indication of the measurement result of the first measurement. The network device may determine whether the measurement result of the first measurement is available according to the availability indication, and in a case where it is determined that the measurement result of the first measurement is available, the network device may not send a configuration of the first measurement to the terminal in the cell of the second radio access technology, so that the terminal does not delete the measurement result of the first measurement, and may send the measurement result of the first measurement to the network device. Accordingly, it is beneficial in saving resources required for the network device to send the configuration to the terminal. Accordingly, it is beneficial in ensuring that the measurement result of the first measurement in the terminal may be fully utilized, and in saving resources required for the network device to send the configuration to the terminal.

It should be note that in a case where the network device determines that the measurement result of the first measurement is available according to the first availability indication, the network device may not send a configuration of the first measurement to the terminal in the cell of the second radio access technology, or may send a configuration of the first measurement to the terminal in the cell of the second radio access technology, which is determined by the network device independently.

In an embodiment, receiving the related information of the first measurement sent by the terminal includes determining the related information of the first measurement according to the information of the second radio access technology.

The terminal may reuse information of the second radio access technology to carry the related information of the first measurement for sending to the network device, or reuse the information of the second radio access technology to indicate the related information of the first measurement to the network device. The network device may reuse the information of the second radio access technology to determine the related information of the first measurement sent by the terminal. Accordingly, the existing information can be fully utilized without newly defined information, which is conducive to simplifying the protocol.

In an embodiment, the information of the second radio access technology for carrying the related information of the first measurement may include signaling of the second radio access technology, such as RRC signaling, in which the RRC signaling includes at least one of: RRCSetupComplete, RRCConnectionSetupComplete, RRCResumeComplete, RRCConnectionResumeComplete. The signaling of the second radio access technology may carry an availability indication of the first measurement of the first radio access technology to indicate the related information of the first measurement, or the signaling of the second radio access technology may carry an availability indication of the first measurement of the second radio access technology to indicate the related information of the first measurement.

In an embodiment, the terminal indicates the related information of the first measurement through the information of the second radio access technology. The information of the second radio access technology for indicating the related information of the first measurement may include an availability indication of the second radio access technology. In this case, the information in the second radio access technology (specifically e.g., the availability indication of the second radio access technology described above) includes at least one of: a logged measurement availability indication; a logged Bluetooth measurement (logMeasAvailableBT) availability indication; a logged wireless local area network (logMeasAvailableWLAN) availability indication; or a logged measurement configuration (sigLogMeasConfigAvailable) availability indication.

For example, in a case where the terminal has the measurement result of the first measurement, the terminal may indicate the availability indication of the measurement result of the first measurement to the network device through the logged measurement availability indication of the second radio access technology. Further, in a case where the measurement result is a measurement result for Bluetooth, the terminal may indicate the availability indication of the measurement result of the first measurement to the network device through the logged Bluetooth measurement availability indication; in a case where the measurement result is a measurement result for the wireless local area network, the terminal may indicate the availability indication of the measurement result of the first measurement to the network device through the logged wireless local area network measurement availability indication.

For example, in a case where the terminal has the configuration of the first measurement, the terminal may indicates an availability indication of the configuration of the first measurement through the logged measurement configuration availability indication of the second radio access technology.

In an embodiment, the terminal may send the availability indication of the first measurement to the network device by carrying the newly defined availability indication of the first radio access technology in signaling of the second radio access technology, and by carrying the availability indication of the first measurement in the availability indication of the first radio access technology.

In an embodiment, the information receiving method further includes receiving capability information sent by the terminal, in which the capability information indicates whether the terminal supports cross-radio access technology sending of the related information of the first measurement.

In an embodiment, the related information of the first measurement may include at least one of: a measurement result of the first measurement; or an availability indication of the first measurement.

For example, the related information of the first measurement includes the availability indication of the first measurement. The terminal may send capability information to the network device, and the capability information indicates whether the terminal supports cross-radio access technology sending of the availability indication of the first measurement. Accordingly, it is beneficial in ensuring that the network device determines whether the terminal supports cross-radio access technology sending of the availability indication of the first measurement, so that the network device may subsequently perform an appropriate operation.

For example, in a case where the network device determines that the terminal supports cross-radio access technology sending of the availability indication of the first measurement according to the capability information, the network device requests the terminal to report the availability indication; in a case where the network device determines that the terminal does not support cross-radio access technology sending of the availability indication of the first measurement according to the capability information, the network device does not request the terminal to report the availability indication.

For example, the related information of the first measurement includes the measurement result of the first measurement. The terminal may send capability information to the network device, and the capability information indicates whether the terminal supports cross-radio access technology sending of the measurement result of the first measurement. Accordingly, it is beneficial in ensuring that the network device determines whether the terminal supports cross-radio access technology sending of the measurement result of the first measurement, so that the network device may subsequently perform an appropriate operation.

For example, in a case where the network device determines that the terminal supports cross-radio access technology sending of the measurement result of the first measurement according to the capability information, the network device requests the terminal to report the measurement result; in a case where the network device determines that the terminal does not support cross-radio access technology sending of the availability indication of the first measurement according to the capability information, the network device does not request the terminal to report the measurement result.

Embodiments of the present disclosure further provide an information sending method performed by a communication system, including: a terminal and a network device.

The terminal is configured to send related information of a first measurement to a network device, in which the terminal camps on a cell of a second radio access technology, and the terminal is configured with the first measurement of a first radio access technology.

The network device is configured to receive related information of a first measurement sent by a terminal, in which the terminal camps on a cell of a second radio access technology, and the terminal is configured with the first measurement of a first radio access technology.

It should be noted that regarding other contents related to the present embodiment, reference may be made to the description of relevant contents in each of the above embodiments, which will not be repeated here.

Corresponding to the embodiments of the information sending method and the information receiving method described above, the present disclosure also provides embodiments of the information sending apparatus and the information receiving apparatus.

FIG. 8 is a block diagram of an information sending apparatus according to an embodiment of the present disclosure. As illustrated in FIG. 8, the information sending apparatus is configured in a terminal and includes:
a sending module 801 configured to send related information of a first measurement to a network device, in which the terminal camps on a cell of a second radio access technology, and the terminal is configured with the first measurement of a first radio access technology.

In an embodiment, the related information of the first measurement includes at least one of: a measurement result of the first measurement; or an availability indication of the first measurement.

In an embodiment, the availability indication of the first measurement includes at least one of: an availability indication of a configuration of the first measurement, in which the terminal has the configuration of the first measurement; or an availability indication of a measurement result of the first measurement, in which the terminal has the measurement result of the first measurement.

In an embodiment, the terminal having the configuration of the first measurement includes one of: the terminal is configured with the configuration of the first measurement; or the terminal is configured with the configuration of the first measurement, and the configuration of the first measurement is valid.

In an embodiment, the configuration of the first measurement being valid includes at least one of: a current time is within a validity time corresponding to the configuration of the first measurement; or the terminal is within a validity area corresponding to the configuration of the first measurement.

In an embodiment, the sending module is configured to send the related information of the first measurement to the network device in a case where a first condition is satisfied.

In an embodiment, the first condition includes at least one of: an identifier of a network currently registered by the terminal is a predefined network identifier; or an identifier of a network currently registered by the terminal is a preconfigured network identifier.

In an embodiment, the predefined network identifier includes a network identifier when the terminal receives the configuration of the first measurement of the first radio access technology.

In an embodiment, the network identifier includes at least one of: an identifier of a selected network; an identifier of a registered network; or an identifier of at least one equivalent network of the registered network.

In an embodiment, the preconfigured network identifier includes a network identifier indicated by the configuration of the first measurement of the first radio access technology.

In an embodiment, the sending module is configured to determine whether a first condition is satisfied in a case where the terminal supports cross-radio access technology sending of the related information of the first measurement, in which in a case where the first condition is satisfied, an availability indication is sent to the network device; or in a case where the terminal does not support cross-radio access technology sending of the related information of the first measurement, an availability indication is sent to the network device.

In an embodiment, the first measurement includes at least one of: a minimization of drive test log; an idle mode measurement log; a random access information log; a connection establishment failure information log; a radio link failure information log; a mobility history information log; a successful handover information log; or a coarse location information log.

In an embodiment, the sending module is configured to send the related information of the first measurement to the network device by carrying the related information of the first measurement in the information of the second radio access technology, or indicate the related information of the first measurement to the network device through the information of the second radio access technology.

In an embodiment, the information of the second radio access technology includes at least one of: a logged measurement availability indication; a logged Bluetooth measurement availability indication; a logged wireless local area network measurement availability indication; or a logged measurement configuration availability indication.

In an embodiment, the first radio access technology is long term evolution and the second radio access technology is new radio; or the first radio access technology is new radio and the second radio access technology is long term evolution.

In an embodiment, the sending module is further configured to send capability information to the network device, in which the capability information indicates whether the terminal supports cross-radio access technology sending of the related information of the first measurement.

FIG. 9 is a block diagram of an information receiving apparatus according to an embodiment of the present disclosure. As illustrated in FIG. 9, the information receiving apparatus is configured in a network device and includes:
a receiving module 901 configured to receive related information of a first measurement sent by a terminal, in which the terminal camps on a cell of a second radio access technology, and the terminal is configured with the first measurement of a first radio access technology.

In an embodiment, the related information of the first measurement includes at least one of: a measurement result of the first measurement; or an availability indication of the first measurement.

In an embodiment, the availability indication includes at least one of: an availability indication of a configuration of the first measurement; or an availability indication of a measurement result of the first measurement.

In an embodiment, the first measurement includes at least one of: a minimization of drive test log; an idle mode measurement log; a random access information log; a connection establishment failure information log; a radio link failure information log; a mobility history information log; a successful handover information log; or a coarse location information log.

In an embodiment, the receiving module is configured to determine the related information of the first measurement according to the information of the second radio access technology sent by the terminal.

In an embodiment, the information of the second radio access technology includes at least one of: a logged measurement availability indication; a logged Bluetooth measurement availability indication; a logged wireless local area network measurement availability indication; or a logged measurement configuration availability indication.

In an embodiment, the first radio access technology is long term evolution and the second radio access technology is new radio; or the first radio access technology is new radio and the second radio access technology is long term evolution.

In an embodiment, the receiving module is configured to receive capability information sent by the terminal, in which the capability information indicates whether the terminal supports cross-radio access technology sending of the related information of the first measurement.

For the apparatus embodiments, since they basically correspond to the method embodiments, it is sufficient to refer to a portion of the description of the method embodiments where relevant. The apparatus embodiments described above are merely illustrative, the modules described as separate components may or may not be physically separated, and the components displayed as modules may or may not be physical modules, that is, they may be located in one place, or it can be distributed to multiple network modules. Some or all of the modules can be selected according to actual needs to achieve the purpose of the solution of the present embodiment, which can be understood and implemented by those of ordinary skill in the art without creative work.

Embodiments of the present disclosure further provide a communication system. The communication system includes a terminal configured to implement the information sending method according to any one of the embodiments described above and a network device configured to implement the information receiving method according to any one of the embodiments described above.

Embodiments of the present disclosure further provide a communication apparatus. The communication apparatus includes: a processor; and a memory storing a computer program, in which the processor is configured to execute the computer program to implement the information sending method according to any one of the embodiments described above.

Embodiments of the present disclosure further provide a communication apparatus. The communication apparatus includes: a processor; and a memory storing a computer program, in which the processor is configured to execute the computer program to implement the information receiving method according to any one of the embodiments described above.

Embodiments of the present disclosure further provide a computer-readable storage medium storing a computer program that when executed by a processor, implements the information sending method according to any one of the embodiments described above.

Embodiments of the present disclosure further provide a computer-readable storage medium storing a computer program that when executed by a processor, implements the information receiving method according to any one of the embodiments described above.

As illustrated in FIG. 10, FIG. 10 is a block diagram of an apparatus 1000 for receiving information according to an embodiment of the present disclosure. The apparatus 1000 may be a base station. Referring to FIG. 10, the apparatus 1000 includes a processing component 1022, which may further include one or more processors, a wireless transmit/receive component 1024, an antenna component 1026, and a signal processing portion specific to the wireless interface. One of the processors in the processing component 1022 may be configured to implement the information receiving method described in any of the above embodiments.

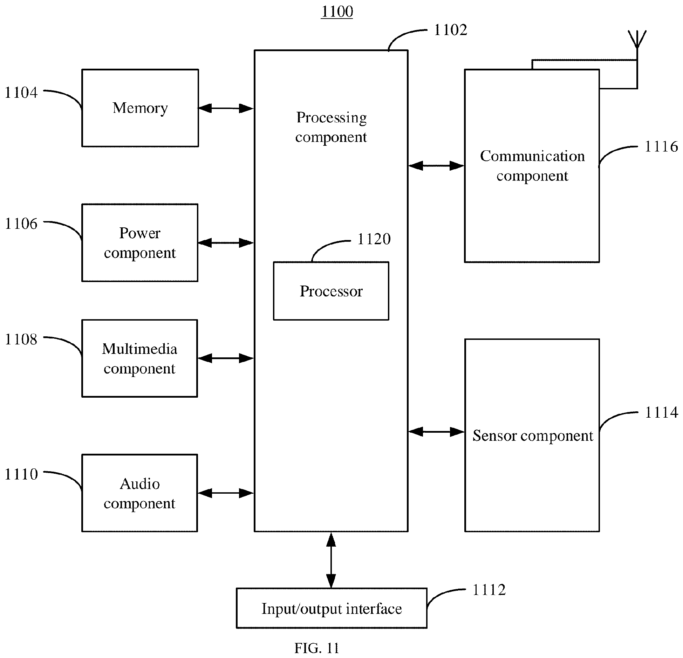

FIG. 11 is a block diagram of an apparatus 1100 for sending information according to an embodiment of the present disclosure. For example, the apparatus 1100 may be a terminal, such as a mobile phone, a computer, a digital broadcast terminal, a messaging device, a game console, a tablet device, a medical device, a fitness device, a personal digital assistant, etc.

As illustrated in FIG. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 generally controls overall operation of the apparatus 1100, such as operations related to display, call, data communication, camera and record. The processing component 1102 may include one or a plurality of processors 1120 to execute instructions, to implement all or a part of steps of the information sending method of any of the above embodiments. Additionally, the processing component 1102 may include one or more modules, facilitating interaction between the processing component 1102 and other components. For example, the processing component 1102 may include a multimedia module, facilitating interaction between the multimedia component 1108 and the processing component 1102.

The memory 1104 is configured to store various types of data to support the operations of the apparatus 1100. Examples of these data include instructions, contact data, telephone book data, messages, pictures, videos, etc. for any application or method operated on the apparatus 1100.

The power component 1106 provides power for various components of the apparatus 1100. The power component 1106 may include a power management system, one or a plurality of power sources, and other components associated with generating, managing and distributing power for the apparatus 1100.

The multimedia component 1108 includes a screen providing one output interface between the apparatus 1100 and the user. In some embodiments, the screen may include a liquid crystal display (LCD), and a touch panel (TP). If the screen includes the touch panel, the screen may be realized as a touch screen, so as to receive an input signal from the user.

The audio component 1110 is configured to output and/or input an audio signal. For example, the audio component 1110 includes a microphone (MIC). The microphone is configured to receive external audio signal when the apparatus 1100 is in the operation mode, such as in a call mode, a record mode and a speech recognition mode. The received audio signal can be further stored in the memory 1104 or transmitted via the communication component 1116. In some embodiments, the audio component 1110 further includes a speaker configured to output the audio signal.

The I/O interface 1112 provides an interface between the processing component 1102 and a peripheral interface module, which may be a keyboard, a click wheel, a button, or the like. The button may include but not limited to a homepage button, a volume button, a start button and a lock button.

The sensor component 1114 includes one or a plurality of sensors configured to provide state assessments of various aspects of apparatus 1100.

The communication component 1116 is configured to facilitate wired or wireless communication between the apparatus 1100 and other apparatuses. The apparatus 1100 may access to wireless network based on communication standard, such as Wi-Fi, 2G, 3G, 4G LTE, 5G NR, or combination thereof. In an illustrative embodiment, the communication component 1116 receives a broadcast signal or information related to the broadcast from an external broadcast management system. In an illustrative embodiment, the communication component 1116 further includes a near-field communication (NFC) module to promote short range communication. For example, the NFC module may be realized based on a radio frequency identification (RFID) technology, an infra-red data association (IrDA) technology, an ultra-wide band (UWB) technology, a Bluetooth (BT) technology and other technologies.

In an illustrative embodiment, the apparatus 1100 may be realized by one or a plurality of application specific integrated circuits (ASIC), digital signal processors (DSP), digital signal processing equipment (DSPD), programmable logic devices (PLD), field-programmable gate arrays (FPGA), controllers, microcontrollers, microprocessors or other electronic elements configured to execute the information sending method of any of the above embodiments.

In illustrative embodiments, there is also provided a non-transitory computer-readable storage medium including instructions, such as a memory 1104 including instructions, and the instructions is executable by the processor 1120 of the apparatus 1100 to implement the information sending method of any of the above embodiments. For example, the non-transitory computer readable storage medium may be ROM, random access memory (RAM), CD-ROM, magnetic tape, floppy disks, and optical data storage devices, among others.

Other embodiments of the present disclosure will readily occur to a person skilled in the art upon consideration of the specification and practice of the present disclosure disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as exemplary only, with the true scope and spirit of the disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. An information sending method, performed by a terminal, comprising:
sending related information of a first measurement to a network device, wherein the terminal camps on a cell of a second radio access technology, and the terminal is configured with the first measurement of a first radio access technology.

2. The method according to claim 1, wherein the related information of the first measurement comprises at least one of:
a measurement result of the first measurement; or
an availability indication of the first measurement.

3. The method according to claim 2, wherein the availability indication of the first measurement comprises at least one of:
an availability indication of a configuration of the first measurement, wherein the terminal has the configuration of the first measurement; or
an availability indication of a measurement result of the first measurement, wherein the terminal has the measurement result of the first measurement.

4. The method according to claim 3, wherein the terminal having the configuration of the first measurement comprises one of:
the terminal is configured with the configuration of the first measurement; or
the terminal is configured with the configuration of the first measurement, and the configuration of the first measurement is valid.

5. The method according to claim 4, wherein the configuration of the first measurement being valid comprises at least one of:
a current time is within a validity time corresponding to the configuration of the first measurement; or
the terminal is within a validity area corresponding to the configuration of the first measurement.

6. The method according to any one of claims 1 to 5, wherein sending the related information of the first measurement to the network device comprises:
sending the related information to the network device in a case where a first condition is satisfied.

7. The method according to claim 6, wherein the first condition comprises at least one of:
an identifier of a network currently registered by the terminal is a predefined network identifier; or
an identifier of a network currently registered by the terminal is a preconfigured network identifier.

8. The method according to claim 7, wherein the preconfigured network identifier comprises:
a network identifier when the terminal receives the configuration of the first measurement of the first radio access technology.

9. The method according to claim 8, wherein the network identifier comprises at least one of:
an identifier of a selected network;
an identifier of a registered network; or
an identifier of at least one equivalent network of the registered network.

10. The method according to claim 7, wherein the preconfigured network identifier comprises:
a network identifier indicated by the configuration of the first measurement of the first radio access technology.

11. The method according to any one of claims 1 to 10, wherein sending the related information of the first measurement of the first radio access technology to the network device comprises:
determining whether a first condition is satisfied in a case where the terminal supports cross-radio access technology sending of the related information of the first measurement, wherein in a case where the first condition is satisfied, an availability indication is sent to the network device; or
sending an availability indication to the network device in a case where the terminal does not support cross-radio access technology sending of the related information of the first measurement.

12. The method according to any one of claims 1 to 11, wherein the first measurement comprises at least one of:
a minimization of drive test log;
an idle mode measurement log;
a random access information log;
a connection establishment failure information log;
a radio link failure information log;
a mobility history information log;
a successful handover information log; or
a coarse location information log.

13. The method according to any one of claims 1 to 12, wherein sending the related information of the first measurement to the network device comprises:
sending the related information to the network device by carrying the related information in information of the second radio access technology.

14. The method according to claim 13, wherein the information of the second radio access technology comprises at least one of:
a logged measurement availability indication;
a logged Bluetooth measurement availability indication;
a logged wireless local area network measurement availability indication; or
a logged measurement configuration availability indication.

15. The method according to any one of claims 1 to 14, wherein the first radio access technology is long term evolution and the second radio access technology is new radio; or the first radio access technology is new radio and the second radio access technology is long term evolution.

16. The method according to any one of claims 1 to 15, further comprising:
sending capability information to the network device, wherein the capability information indicates whether the terminal supports cross-radio access technology sending of the related information of the first measurement.

17. An information receiving method, performed by a network device, comprising:
receiving related information of a first measurement sent by a terminal, wherein the terminal camps on a cell of a second radio access technology, and the terminal is configured with the first measurement of a first radio access technology.

18. The method according to claim 17, wherein the related information of the first measurement comprises at least one of:
a measurement result of the first measurement; or
an availability indication of the first measurement.

19. The method according to claim 18, wherein the availability indication of the first measurement comprises at least one of:
an availability indication of a configuration of the first measurement; or
an availability indication of a measurement result of the first measurement.

20. The method according to claim 18 or 19, wherein the first measurement comprises at least one of:
a minimization of drive test log;
an idle mode measurement log;
a random access information log;
a connection establishment failure information log;
a radio link failure information log;
a mobility history information log;
a successful handover information log; or
a coarse location information log.

21. The method according to any one of claims 18 to 20, wherein receiving the related information of the first measurement sent by the terminal comprises:
determining the related information of the first measurement according to information of the second radio access technology sent by the terminal.

22. The method according to claim 21, wherein the information of the second radio access technology comprises at least one of:
a logged measurement availability indication;
a logged Bluetooth measurement availability indication;
a logged wireless local area network measurement availability indication; or
a logged measurement configuration availability indication.

23. The method according to any one of claims 17 to 22, wherein the first radio access technology is long term evolution and the second radio access technology is new radio; or the first radio access technology is new radio and the second radio access technology is long term evolution.

24. The method according to any one of claims 17 to 23, further comprising:
receiving capability information sent by the terminal, wherein the capability information indicates whether the terminal supports cross-radio access technology sending of the related information of the first measurement.

25. An information sending apparatus, configured in a terminal, comprising: a sending module configured to send related information of a first measurement to a network device, wherein the terminal camps on a cell of a second radio access technology, and the terminal is configured with the first measurement of a first radio access technology.

26. An information receiving apparatus, configured in a network device, comprising:
a receiving module configured to receive related information of a first measurement sent by a terminal, wherein the terminal camps on a cell of a second radio access technology, and the terminal is configured with the first measurement of a first radio access technology.

27. A communication system comprising a terminal and a network device, wherein the terminal is configured to implement the information sending method according to any one of claims 1 to 16, and the network device is configured to implement the information receiving method according to any one of claims 17 to 24.

28. A communication apparatus, comprising:
a processor; and
a memory storing a computer program,
wherein the processor is configured to execute the computer program to implement the information sending method according to any one of claims 1 to 16.

29. A communication apparatus, comprising:
a processor; and
a memory storing a computer program,
wherein the processor is configured to execute the computer program to implement the information receiving method according to any one of claims 17 to 24.

30. A computer readable storage medium storing a computer program that when executed by a processor, implements the information sending method according to any one of claims 1 to 16.

31. A computer readable storage medium storing a computer program that when executed by a processor, implements the information receiving method according to any one of claims 17 to 24.
